# EUROPÄISCHE PATENTSCHRIFT

(11) **EP 3 665 053 B1**
(45) Veröffentlichungstag und Bekanntmachung des Hinweises auf die Patenterteilung: **12.04.2023**
(21) Anmeldenummer: 18749367.1
(22) Anmeldetag: 02.08.2018
(51) Int. Cl.: B60W 30/14

(54) **VERFAHREN ZUM EINSTELLEN EINER FAHRGESCHWINDIGKEIT EINES KRAFTFAHRZEUGS UND KRAFTFAHRZEUG MIT EINER STEUERVORRICHTUNG**
METHOD FOR SETTING A DRIVING SPEED OF A MOTOR VEHICLE, AND MOTOR VEHICLE HAVING A CONTROL UNIT
PROCÉDÉ DE RÉGLAGE DE LA VITESSE DE DÉPLACEMENT D'UN VÉHICULE AUTOMOBILE ET VÉHICULE AUTOMOBILE AYANT UN DISPOSITIF DE COMMANDE

(30) Priorität: 10.08.2017 DE 102017213977; 23.01.2018 DE 102018200985
(43) Veröffentlichungstag der Anmeldung: 17.06.2020
(73) Patentinhaber: Volkswagen Aktiengesellschaft, 38440 Wolfsburg (DE)
(72) Erfinder: ALBRECHT, Jan-Christoph, 38442 Wolfsburg (DE); WESS, Alexander, 38442 Wolfsburg (DE); SCHRÖDER, Hendrik, 38173 Sickte (DE)
(86) Internationale Anmeldenummer: PCT/EP2018/070927
(87) Internationale Veröffentlichungsnummer: WO 2019/030085

(56) Entgegenhaltungen:
- DE-A1- 10 205 039
- DE-A1-102016 121 881
- GB-A- 2 546 767
- JP-A- H11 227 492
- US-B1- 7 319 927

## Beschreibung

Die Erfindung betrifft ein Verfahren zum Einstellen einer Fahrgeschwindigkeit eines Kraftfahrzeugs. Die Erfindung betrifft weiterhin ein Kraftfahrzeug mit einer Steuervorrichtung zum Ausführen des erfindungsgemäßen Verfahrens.

Es sind Kraftfahrzeuge bekannt, deren Geschwindigkeit über ein Fahrzeugpedal oder eine Pedalvorrichtung, etwa ein Gaspedal und ein Bremspedal, angepasst werden kann. Nachteilig dabei ist, dass die tatsächlich erreichte Fahrgeschwindigkeit des Kraftfahrzeugs dabei nicht geregelt wird, sondern ein Fahrer die Einstellung oder Bedienstellung des Fahrzeugpedals solange verändern muss, bis eine vorbestimmte Fahrgeschwindigkeit erreicht ist.

Es sind Fahrgeschwindigkeitsregelungen oder Tempomaten^{®} bekannt, bei denen der Fahrer eine bestimmte Fahrgeschwindigkeit eingeben kann und das Fahrzeug diese Fahrgeschwindigkeit einregelt. Der Nachteil daran ist, dass diese konstante Fahrgeschwindigkeit gerade bei Geländefahrten oft an eine Fahrsituation angepasst werden muss, wobei das Anpassen durch eine manuelle Eingabe beispielsweise an einem Hebel oder Druckknopf mit zwei jeweiligen Richtungen zum Erhöhen oder Verringern der Geschwindigkeit umständlich und zu zeitaufwändig sein kann, sodass eine adäquate Fahrgeschwindigkeit unter Umständen nicht rechtzeitig eingestellt werden kann. Es ist auch eine Methode zum Anpassen der Fahrgeschwindigkeit einer Fahrgeschwindigkeitsregelung oder eines Tempomaten^{®} über die Fahrzeugpedale bekannt.

Aus der WO 2014/139704 A1 sind ein System und eine Methode bekannt, um eine Geschwindigkeit eines Kraftfahrzeugs zu kontrollieren. Dabei kann ein Benutzer eine Geschwindigkeit einstellen, die das Kraftfahrzeug für die Geschwindigkeitsregelung, also als eine gesetzte oder vorgegebene Regelungs-Geschwindigkeit nutzt. Es ist beschrieben, wie durch das leichte Betätigen des Bremspedals die eingestellte Geschwindigkeit reduziert werden kann. Nachdem das Bremspedal leicht gedrückt wurde, wird eine geänderte Geschwindigkeit für die Geschwindigkeitsregelung genutzt. Nachteilig hierbei ist, dass mit dem Bremspedal die Geschwindigkeitsänderung nur in eine Richtung, nämlich als ein Reduzieren der eingestellten Geschwindigkeit, erfolgen kann, und für ein Erhöhen der eingestellten Geschwindigkeit ein weiteres Pedal (Gaspedal) verwendet werden muss. Ebenso kann die Verwendung eines Tempomaten^{®} beispielsweise bei einer Geländefahrt ungeeignet sein, da dort die Geschwindigkeit kontinuierlich angepasst werden muss, was über eine Einstellung mit zwei Fahrzeugpedalen zu zeitaufwändig sein kann. Es kann gerade auch bei einer Geländefahrt, wenn das Kraftfahrzeug stark wackelt, schwierig sein, das jeweilige Fahrzeugpedal in der geeigneten Weise nur leicht zu betätigen, vor allem wenn man zwischen zwei Pedalen wechseln muss.

Die US 7 319 927 B1 offenbart eine Methode zum Steuern eines Niedriggeschwindigkeitsbetriebs eines Fahrzeugs, wobei anhand einer Gaspedalstellung eine Zielgeschwindigkeit eingestellt wird. Bei der Methode wird die Zielgeschwindigkeit in Abhängigkeit von der Gaspedalstellung und unabhängig von Straßenbedingungen aufrechterhalten.

Aufgabe der Erfindung ist es, ein Verfahren bereitzustellen, durch das eine Fahrgeschwindigkeit eines Kraftfahrzeugs mit einem Fahrzeugpedal kontinuierlich geregelt wird, wobei die Fahrgeschwindigkeit für die besagte Geschwindigkeitsregelung mit einem einzigen Fahrzeugpedal schnell eingestellt oder angepasst werden können soll.

Dazu stellt die Erfindung ein Verfahren zum Einstellen einer Fahrgeschwindigkeit eines Kraftfahrzeugs auf einem Fahrweg bereit. Das Kraftfahrzeug befindet sich auf dem Fahrweg auf einer Fahrt. Eine Steuervorrichtung des Kraftfahrzeugs, etwa ein Bordcomputer oder Steuergerät des Kraftfahrzeugs, stellt dabei die Fahrgeschwindigkeit in Abhängigkeit von einer durch zwei Extremstellungen begrenzten Bedienstellung einer durch einen Fahrer bedienbaren Pedalvorrichtung des Kraftfahrzeugs ein. Damit ist gemeint, dass die Pedalvorrichtung zwei Extremstellungen oder Anschlagstellungen aufweist, zwischen denen sich die jeweilige Bedienstellung der Pedalvorrichtung befindet oder ändern kann. Beispielsweise ist die Pedalvorrichtung ein Gaspedal und die erste Extremstellung das unbediente Gaspedal, also das Gaspedal in einer Ruhestellung oder mit einer Bedienstellung von 0 %, und die zweite Extremstellung das voll durchgedrückte Gaspedal, also das Gaspedal in einer Bedienstellung "Vollgas" oder einer Bedienstellung des Wertes 100 %. Je nachdem, in welcher Bedienstellung sich die Pedalvorrichtung befindet, stellt die Steuervorrichtung eine Fahrgeschwindigkeit des Kraftfahrzeugs ein.

Erfindungsgemäß erfasst die Steuervorrichtung dabei die aktuelle Bedienstellung der Pedalvorrichtung. Die Bedienstellung kann als Soll-Wert einer Regelgröße bezeichnet werden. Die Steuervorrichtung erfasst also, ob eine erste Extremstellung, beispielsweise eine 0 % durchgedrückte Pedalvorrichtung, vorliegt oder ob eine zweite Extremstellung, beispielsweise eine zu 100 % durchgedrückte Pedalvorrichtung, vorliegt oder ob eine andere, zwischen den beiden Extremstellungen liegende Bedienstellung vorliegt. Eine solche zwischen den beiden Extremstellungen liegende Bedienstellung kann zum Beispiel eine zu 50 % durchgedrückte Pedalvorrichtung sein, diese Bedienstellung liegt also dann vor, wenn beispielsweise ein Fahrer die Pedalvorrichtung zur Hälfte durchdrückt oder bedient.

In Abhängigkeit von der erfassten Bedienstellung ermittelt die Steuervorrichtung zumindest in einem vorbestimmten Fahrmodus eine zur jeweiligen Bedienstellung, also zur Bedienstellung, die gerade erfasst wird, korrespondierende Soll-Fahrgeschwindigkeit. Die Bedienstellung wird dabei kontinuierlich erfasst und die Soll-Fahrgeschwindigkeit kontinuierlich ermittelt. Ein solcher vorbestimmter Fahrmodus kann zum Beispiel dann vorliegen, wenn ein Fahrer in einer Einstellung am Kraftfahrzeug eingestellt hat, dass die Geschwindigkeitsregelung gemäß des erfindungsgemäßen Verfahrens erfolgen soll. Mit der korrespondierenden Soll-Fahrgeschwindigkeit ist gemeint, dass in Abhängigkeit davon, wie stark die Pedalvorrichtung bedient oder ausgelenkt ist, eine Soll-Fahrgeschwindigkeit höher oder geringer eingestellt ist. Beispielsweise dann, wenn die Pedalvorrichtung zu 10 % durchgedrückt oder bedient ist, kann eine Soll-Fahrgeschwindigkeit 20 km/h betragen und dann, wenn die Pedalvorrichtung zu 90 % durchgedrückt oder bedient ist, kann eine Soll-Fahrgeschwindigkeit 180 km/h betragen. Die Soll-Fahrgeschwindigkeit ist dabei diejenige Fahrgeschwindigkeit, an die die tatsächliche Fahrgeschwindigkeit des Kraftfahrzeugs angepasst werden soll. Wenn das Kraftfahrzeug beispielsweise eine Fahrgeschwindigkeit von 10 km/h aufweist und die Soll-Fahrgeschwindigkeit 20 km/h beträgt, regelt die Steuervorrichtung die Motorleistung entsprechend so, dass die Fahrgeschwindigkeit von 10 km/h auf 20 km/h erhöht wird. Die Korrespondenz zwischen dem Grad der Bedienung der Pedalvorrichtung, also der Bedienstellung, und der zugeordneten Soll-Fahrgeschwindigkeit kann dabei beliebig mittels einer Kennlinie eingestellt werden oder es kann eine Voreinstellung genutzt werden. Diese Einstellung kann beispielsweise herstellerseitig erfolgen oder auch von einem Fahrzeugfahrer individuell eingestellt werden. Es kann auch zwischen unterschiedlichen Einstellungen gewählt werden, sodass bei einer ersten Einstellung bei einer gleichen Bedienstellung eine andere Soll-Fahrgeschwindigkeit zugeordnet ist, als bei einer zweiten Einstellung.

Erfindungsgemäß stellt die Steuervorrichtung die tatsächliche Fahrgeschwindigkeit des Kraftfahrzeugs zu der jeweiligen Soll-Fahrgeschwindigkeit korrespondierend mittels einer Regelung ein. Die Steuervorrichtung regelt also die Motorleistung auf diejenige Motorleistung, die notwendig ist, damit das Kraftfahrzeug tatsächlich die ermittelte Soll-Fahrgeschwindigkeit aufweist. Statt einer Anpassung der Motorleistung kann auch eine Bremse des Kraftfahrzeugs verwendet werden, um die Fahrgeschwindigkeit zu reduzieren. Die Bedienstellung der Pedalvorrichtung wird somit als Soll-Größe einer Regelung verwendet, wobei die Fahrgeschwindigkeit des Kraftfahrzeugs als Regelgröße auf diese Soll-Größe eingeregelt wird. Die tatsächliche Fahrgeschwindigkeit wird dabei an die Soll-Fahrgeschwindigkeit angepasst, unabhängig davon, wie eine aktuelle Beschaffenheit des Fahrweges aussieht. Mit einer Beschaffenheit des Fahrweges ist beispielsweise eine Steigung und/oder ein Gefälle des Fahrweges oder einer Straße oder eines Weges, auf dem jeweils das Kraftfahrzeug fährt, gemeint. Eine Beschaffenheit des Fahrweges kann auch eine Stufe und/oder eine Mulde und/oder eine Straßenunebenheiten sein. In solchen Situationen muss ein Fahrer normalerweise die Bedienstellung des Pedals verändern, um eine Fahrgeschwindigkeit konstant zu halten. Verfahrensgemäß übernimmt das nun die Steuervorrichtung und die Bedienstellung kann die gleiche bleiben. Die jeweilige Fahrgeschwindigkeit wird dabei an die Soll-Fahrgeschwindigkeit angepasst, solange die jeweilige Bedienstellung erfasst wird. Wenn sich die Bedienstellung ändert, folgt also immer auch die Fahrgeschwindigkeit der Änderung. Die Soll-Fahrgeschwindigkeit ist also stets abhängig von der jeweiligen Bedienstellung. In anderen Worten wird die Fahrgeschwindigkeit so lange an die jeweilige Soll-Fahrgeschwindigkeit angepasst oder auf diese eingeregelt oder eingestellt, solange eine jeweilige Bedienstellung vorliegt, beispielsweise also so lange, wie ein Fahrer des Kraftfahrzeugs die Pedalvorrichtung bedient. Insbesondere dann, wenn ein Fahrer die Pedalvorrichtung nicht mehr bedient, diese also beispielsweise eine Bedienstellung von 0 % aufweist, und mit einer Bedienstellung von 0 % eine Soll-Fahrgeschwindigkeit von 0 km/h korrespondiert, wird das Kraftfahrzeug oder dessen Steuervorrichtung in Konsequenz die Fahrgeschwindigkeit auf 0 km/h einstellen, sodass das Kraftfahrzeug zum Stillstand kommt. In anderen Worten wird die Fahrgeschwindigkeit des Kraftfahrzeugs kontinuierlich oder stets an die durch die Bedienstellung der Pedalvorrichtung vorgegebene Soll-Fahrgeschwindigkeit angepasst. Wenn ein Benutzer oder Fahrer also stärker auf die Pedalvorrichtung drückt, kann die Soll-Fahrgeschwindigkeit erhöht werden und wenn er den Druck verringert, sodass die Bedienstellung in Richtung 0 % verändert wird, kann die Fahrgeschwindigkeit verringert werden.

Dabei kann auch das Beschleunigungsverhalten des Kraftfahrzeugs angepasst werden, wobei das Beschleunigungsverhalten positive als auch negative Beschleunigungen beinhaltet. Vor allem wird eine unkontrolliert starke Bremsung oder eine Vollbremsung dadurch vermieden, dass ein Regler eine Anpassung der eingestellten Geschwindigkeit dann langsamer durchführt, wenn das Fahrpedal durch ein Loslassen von einer betätigten Bedienstellung in eine unbetätigte Bedienstellung zurückschnellt oder zurückfällt. Dies gilt nur, wenn durch die dadurch erreichte sanftere Bremsung keine Kollision des Kraftfahrzeugs entsteht. Ein solches Beschleunigungsverhalten kann über Voreinstellungen im Fahrmodus, z. B. je nach Geschwindigkeitsbereich, eingestellt werden, sodass je nach Einstellung starke oder weniger starke Beschleunigungen möglich sind. Es kann auch in Abhängigkeit von einem aktuellen Geschwindigkeitsbereich eingestellt werden, sodass etwa bei höheren Geschwindigkeiten stärkere Beschleunigungen als bei niedrigen Geschwindigkeiten möglich sind, oder andersherum, um jeweils die Geschwindigkeitsregelung an einen Fahrstil eines Fahrers individuell anpassen zu können. Das Beschleunigungsverhalten kann auch durch verschiedene Modi, etwa einen Sport-Modus und/oder einen Eco-Modus eingestellt werden, um einerseits ein sportliches Fahrverhalten und/oder andererseits ein energiesparsames Fahrverhalten zu ermöglichen. Es kann auch aufgrund eines Betätigungsverhaltens eingestellt werden, so dass dann, wenn die Pedalstellung schnell geändert wird eine schnelle Beschleunigung (Beschleunigung oder Bremsen) einhergeht und dann, wenn die Pedalstellung langsam geändert wird, ein langsame Beschleunigung einhergeht.

Der Vorteil, der sich durch das erfindungsgemäße Verfahren ergibt, ist, dass ein Fahrer eines Kraftfahrzeugs durch ein Bedienen der Pedalvorrichtung eine Soll-Fahrgeschwindigkeit vorgeben kann und diese jederzeit einfach und schnell durch eine Änderung der Bedienstellung der Pedalvorrichtung verändern kann. Insbesondere dann, wenn sich eine aktuelle Beschaffenheit des Fahrweges verändert, muss der Fahrer die Bedienstellung der Pedalvorrichtung jedoch nicht verändern, wenn eine Geschwindigkeit des Kraftfahrzeugs konstant gehalten werden soll. Das ist insbesondere bei Geländefahrten mit häufig wechselnden Steigungen und Gefälle des Fahrweges vorteilhaft, da ein Fahrer für ein konstantes Halten einer Fahrgeschwindigkeit des Kraftfahrzeugs nicht jeweilig die Bedienstellung der Pedalvorrichtung verändern muss, um ein Drehmoment oder eine Leistung des Motors an die jeweilige Beschaffenheit des Fahrweges anzupassen und somit die Fahrgeschwindigkeit konstant zu halten. Vielmehr wird verfahrensgemäß durch die Steuervorrichtung die Motorleistung an die jeweilige Beschaffenheit des Fahrweges angepasst oder automatisch angepasst oder ohne Nutzerhandlung angepasst. Dadurch ergibt sich der Vorteil, dass durch die Bedienstellung der Pedalvorrichtung eine genaue Geschwindigkeit vorgegeben werden kann, die unabhängig von einer Steigung oder einem Gefälle oder einer Unebenheit eines Fahrweges in die tatsächliche Fahrgeschwindigkeit des Kraftfahrzeugs umgesetzt wird. Ein weiterer Vorteil des Verfahrens liegt darin, dass mit nur einer einzigen Pedalvorrichtung die Soll-Fahrgeschwindigkeit, auf die die Fahrgeschwindigkeit des Kraftfahrzeugs von der Steuervorrichtung eingeregelt wird, gewählt werden kann und die Soll-Fahrgeschwindigkeit dadurch sehr schnell und einfach und intuitiv verändert werden kann. Es kann auch möglich sein, auf diese Weise Kraftfahrzeuge mit nur einem einzigen Pedal zu steuern.

Bei dem Verfahren wird darüber hinaus die Soll-Fahrgeschwindigkeit durch die Bedienstellung der Pedalvorrichtung in Kombination mit einer vorbestimmten Pedalkennlinie der Pedalvorrichtung ermittelt, wobei die vorbestimmte Pedalkennlinie an eine jeweilige Fahrsituation anpassbar ist. Damit ist gemeint, dass eine Änderung der Bedienstellung zwischen den zwei Extremstellungen beispielsweise nicht mit einer Änderung zwischen zwei Extrem-Soll-Fahrgeschwindigkeiten korrespondieren muss. Insbesondere bedeutet ein nicht bedientes Gaspedal nicht automatisch eine Soll-Fahrgeschwindigkeit von 0 km/h und ein voll durchgedrücktes Gaspedal nicht automatisch eine maximale Geschwindigkeit des Kraftfahrzeugs. Beispielsweise kann dann, wenn das Kraftfahrzeug langsam fährt, etwa in einer Stadtfahrt, eine Pedalkennlinie bezüglich der maximalen Soll-Fahrgeschwindigkeit so eingestellt werden, dass bei einer Bedienstellung von 100 % des Gaspedals eine Soll-Fahrgeschwindigkeit von 50 km/h erreicht wird. Hingegen kann bei einer Autobahnfahrt eine Pedalkennlinie bezüglich der maximalen Soll-Fahrgeschwindigkeit so eingestellt werden, dass bei einer Bedienstellung von 100 % des Gaspedals eine Soll-Fahrgeschwindigkeit von 180 km/h erreicht wird. In gleicher Weise können die Soll-Fahrgeschwindigkeiten für eine Bedienstellung von 0 % des Gaspedals (dann z.B. 80 km/h bei der Autobahnfahrt als minimale Soll-Fahrgeschwindigkeit des Fahrmodus) eingestellt werden oder Soll-Fahrgeschwindigkeiten für jeweilige Bedienstellungen eines Bremspedals eingestellt werden. Der Vorteil, der sich daraus ergibt ist, dass die Bedienstellung jeweils eine geeignete Bedienung oder Auflösung für einen jeweiligen Geschwindigkeitsbereich zur Verfügung stellt. Insbesondere auf einer Autobahnfahrt ist es normalerweise nicht notwendig, mit der Pedalvorrichtung Soll-Fahrgeschwindigkeiten von unter 80 km/h einzustellen. Falls es notwendig ist, kann der Fahrmodus geändert werden und eine passende Pedalkennlinie ausgewählt werden.

Zur Erfindung gehören auch Weiterbildungen des erfindungsgemäßen Verfahrens, durch die sich weitere Vorteile ergeben.

In einer Weiterbildung des Verfahrens wird bei einer Änderung der Bedienstellung in Richtung einer ersten Extremstellung die Soll-Fahrgeschwindigkeit erhöht und bei einer Änderung der Bedienstellung in Richtung einer zweiten Extremstellung die Soll-Fahrgeschwindigkeit verringert. Damit ist gemeint, dass beispielsweise dann, wenn die Pedalvorrichtung stärker durchgedrückt wird, sich die Bedienstellung der ersten Extremstellung nähert und somit die Soll-Fahrgeschwindigkeit erhöht wird. Das Verfahren kann aber auch so ausgeführt werden, dass bei einem stärkeren Durchdrücken der Pedalvorrichtung sich die Bedienstellung der zweiten Extremstellung annähert und somit die Soll-Fahrgeschwindigkeit verringert wird. Diese Weiterbildung ist insbesondere dadurch von Vorteil, dass normalerweise bei einem Kraftfahrzeug dann, wenn als Pedalvorrichtung ein Gaspedal gedrückt wird, das Kraftfahrzeug beschleunigt und dann, wenn als Pedalvorrichtung ein Bremspedal gedrückt wird, das Kraftfahrzeug seine Geschwindigkeit verringert. Somit kann durch das erfindungsgemäße Verfahren eine grundsätzlich gewohnte Bedienung des Kraftfahrzeugs vereinfacht weitergeführt werden.

In einer Weiterbildung des Verfahrens wird als Pedalvorrichtung ein einziges Fahrzeugpedal des Kraftfahrzeugs verwendet, wobei die Extremstellungen jeweils zu einer durch den Fahrmodus vorbestimmten Soll-Fahrgeschwindigkeit korrespondieren. Damit ist gemeint, dass beispielsweise verfahrensgemäß allein das Gaspedal des Kraftfahrzeugs als Pedalvorrichtung verwendet wird und die Soll-Fahrgeschwindigkeiten, die durch die jeweiligen Extremstellungen des Gaspedals eingestellt werden, abhängig von einem jeweiligen Fahrmodus sind. Ein Fahrmodus kann dabei zum Beispiel ein erster Modus "Geländefahrt 1" sein oder ein zweiter Modus "Geländefahrt 2" sein. In dem Modus "Geländefahrt 1" können die Soll-Fahrgeschwindigkeiten beispielsweise so eingestellt sein, dass bei einer Bedienstellung in der ersten Extremstellung des Gaspedals, also einem unbedienten Zustand oder zu 0 % bedienten Zustand, die korrespondierende Soll-Fahrgeschwindigkeit 10 km/h beträgt und bei einer Bedienstellung in der zweiten Extremstellung, also einem voll durchgedrückten Zustand des Gaspedals oder zu 100 % bedienten Gaspedal, eine korrespondierende Soll-Fahrgeschwindigkeit 30 km/h trägt. Die korrespondierende Soll-Fahrgeschwindigkeit zur ersten Extremstellung kann aber auch 0 km/h betragen, sodass das Fahrzeug auch über das Gaspedal zum Stillstand gebracht werden kann. Dagegen können in dem zweiten Modus "Geländefahrt 2" die korrespondierenden Soll-Fahrgeschwindigkeiten in der ersten Extremstellung 20 km/h und in der zweiten Extremstellung 60 km/h betragen. Der Vorteil daran ist, dass der erste Modus beispielsweise auf einer auf einem Fahrweg mit einer schlechten Qualität eingestellt werden kann, auf dem das Kraftfahrzeug relativ langsam fahren muss. Der Fahrer kann durch den ersten Modus "Geländefahrt 1" dabei in dem erlaubten Fahrgeschwindigkeitsbereich zwischen 10 km/h und 30 km/h die jeweilige Soll-Fahrgeschwindigkeit genauer einstellen, dadurch dass er für diesen Wertebereich den vollen Bedienbereich der Pedalvorrichtung für Bedienstellungen zur Verfügung hat. Mit anderen Worten erlaubt dieser erste Modus eine feinere Auflösung der Bedienstellung der Pedalvorrichtung. Der Vorteil am zweiten Modus ist dagegen, dass dieser auf einer auf einem Fahrweg mit einer besseren Qualität eingestellt werden kann, auf dem das Fahrzeug zumindest teilweise schneller fahren kann. Dadurch, dass der durch die zwei Extremstellungen definierte Bereich, in dem die jeweilige Soll-Fahrgeschwindigkeit eingestellt werden kann, größer ist, kann ein Fahrer in diesem zweiten Modus schneller zwischen größeren Soll-Fahrgeschwindigkeiten und kleineren Soll-Fahrgeschwindigkeiten wechseln. Die Soll-Fahrgeschwindigkeit kann beispielsweise dann, wenn sich eine Straßenqualität plötzlich verschlechtert, dadurch schnell verringert werden, dass ein Fahrer beispielsweise die Bedienstellung von 90 % auf 10 % reduziert. Es ist auch möglich, dass bei einer Bedienstellung von 0 % eine Soll-Fahrgeschwindigkeit von 0 km/h korrespondiert oder vorgegeben wird und bei einer Zunahme des Wertes der Bedienstellung auch der Wert der Soll-Fahrgeschwindigkeit zunimmt. Der Vorteil dabei ist, dass das Kraftfahrzeug im Stillstand ist, wenn beispielsweise das Fahrpedal oder Gaspedal unbedient ist, und anfährt, wenn das jeweilige Pedal bedient ist.

Eine Weiterbildung des Verfahrens sieht vor, dass als Pedalvorrichtung ein Beschleunigungspedal oder Gaspedal oder Fahrpedal verwendet wird. Durch eine Änderung der jeweiligen Bedienstellung von einer unbedienten Extremstellung, also 0 % Bedienung, in eine durchgedrückte Extremstellung, also 100 % Bedienung, korrespondiert gemäß der Weiterbildung mit einer Erhöhung der Soll-Fahrgeschwindigkeit. Hieraus bietet sich der Vorteil, dass die Fahrgeschwindigkeit in gewohnter Weise erhöht wird, wenn das Gaspedal oder Beschleunigungspedal stärker durchgedrückt wird und die Fahrgeschwindigkeit verringert wird, wenn das Gaspedal weniger stark oder weniger weit durchgedrückt wird. Eine alternative Form der Weiterbildung des Verfahrens sieht vor, dass als Pedalvorrichtung ein Bremspedal verwendet wird. Eine Änderung dessen Bedienstellung von einer unbedienten Extremstellung, also einem Bremspedal mit der Bedienstellung 0 %, in eine durchgedrückte Extremstellung, also einem Bremspedal mit einer Bedienstellung 100 %, korrespondiert dabei mit einer Verringerung der Soll-Fahrgeschwindigkeit. Der Vorteil ist auch hierbei, dass durch die Weiterbildung des Verfahrens in gewohnter Weise das Fahrzeug dadurch seine Fahrgeschwindigkeit verringert, dass das Bremspedal stärker gedrückt wird. Insbesondere kann durch diese Weiterbildung eine sehr geringe Fahrzeuggeschwindigkeit, beispielsweise eine Fahrzeuggeschwindigkeit unterhalb von 6 km/h sehr genau eingestellt werden. Bei einem eingeschalteten Kraftfahrzeug mit Verbrennungsmotor und eingelegtem Getriebegang erreicht dieses normalerweise eine sogenannte Kriechgeschwindigkeit, die beispielsweise 6 km/h beträgt, in dem Fall, dass weder das Gaspedal noch das Bremspedal betätigt werden. Bei einem Bremspedal mit einer Bedienstellung von 0 % kann die Soll-Fahrgeschwindigkeit also gleich der Kriechgeschwindigkeit sein. Bei einer Bedienstellung des Bremspedals von 100 % kann die Soll-Fahrgeschwindigkeit 0 km/h sein. Verfahrensgemäß kann es auch vorgesehen sein, dass dann, wenn das Bremspedal nur 80 % durch getreten ist, die Bedienstellung des Bremspedals also 80 % beträgt, die Soll-Fahrgeschwindigkeit 0 km/h eingestellt wird. Der Vorteil, der sich dabei bietet ist, dass ein Fahrer durch die Betätigung des Bremspedals die tatsächliche Fahrgeschwindigkeit des Kraftfahrzeugs sehr genau einstellen kann. Beispielsweise wird bei einer Betätigung des Bremspedals mit einer Bedienstellung von 50 % eine Soll-Fahrgeschwindigkeit von 3 km/h durch die Steuervorrichtung eingestellt, die ein Fahrer manuell oder eigenständig nur sehr schwierig und ungenau einstellen kann. Auch Tempomaten^{®} sind meist nicht dazu eingerichtet, in solch geringen Geschwindigkeitsbereichen eine Fahrgeschwindigkeit einzustellen. Eine kombinierte Geschwindigkeitseinstellung mit Fahrpedal und Gaspedal ist auch möglich, sodass vorteilhafterweise in diesem Fall per Bremspedal beispielsweise Fahrgeschwindigkeiten zwischen 0 km/h und 10 km/h eingestellt werden können und per Fahrpedal oder Gaspedal Fahrgeschwindigkeiten zwischen 10 km/h und etwa 30 km/h eingestellt werden können.

Eine Weiterbildung des Verfahrens sieht vor, dass als Pedalkennlinie eine nicht-lineare Pedalkennlinie genutzt wird. Damit ist gemeint, dass beispielsweise in einem Bereich der Bedienstellung zwischen 10 % und 20 % eine Soll-Fahrgeschwindigkeit zwischen 10 km/h und 20 km/h eingestellt werden kann und in einem Bereich der Bedienstellung zwischen 80 % und 90 % eine Soll-Fahrgeschwindigkeit zwischen 120 und 180 km/h eingestellt werden kann. Der Vorteil daran ist, dass häufig gerade bei geringen Fahrgeschwindigkeiten eine genaue Einstellung der tatsächlichen Fahrgeschwindigkeit notwendig ist, wohingegen bei hohen Fahrgeschwindigkeiten eine gröbere Einstellungsmöglichkeit ausreichend ist. Mit anderen Worten verändert sich bei einer nichtlinearen Pedalkennlinie eine Änderung der Soll-Fahrgeschwindigkeit bezüglich einer Änderung der Bedienstellung unterschiedlich, je nachdem in welchem Wertebereich sich die Bedienstellung der Pedalvorrichtung befindet. Es ist auch möglich, dass die Pedalkennlinie von einem Nutzer ausgewählt und/oder vom Benutzer selbst definiert wird. Beispielsweise kann ein Benutzer die Auswirkung der Bedienstellung auf die jeweilige Soll-Fahrgeschwindigkeit individuell einstellen. Das ist insbesondere dann vorteilhaft, wenn ein Benutzer häufig auf ungewöhnlichen Fahrwegen oder auf bestimmten Gelände wegen fährt, die eine bestimmte, individuelle Einstellung der Geschwindigkeit des Kraftfahrzeugs voraussetzen.

Eine Weiterbildung des Verfahrens sieht vor, dass die Pedalkennlinie zumindest bezüglich einer Auswirkung einer Änderung der Bedienstellung auf eine Änderung der Soll-Fahrgeschwindigkeit in Abhängigkeit der Fahrgeschwindigkeit und/oder einer aktuellen Getriebeübersetzung eingestellt wird. Damit ist gemeint, dass beispielsweise die mit den Extremstellungen der Bedienstellung korrespondierenden Soll-Fahrgeschwindigkeiten verändert werden, wenn das Kraftfahrzeug eine Fahrgeschwindigkeit über einer vorbestimmten Grenzgeschwindigkeit erreicht. Es können auch mehrere vorbestimmte Grenzgeschwindigkeiten definiert sein, bei denen jeweils eine Pedalkennlinie verändert wird oder eine andere Pedalkennlinie eingestellt wird. Eine Pedalkennlinie kann auch dann verändert werden oder eine neue Pedalkennlinie gewählt werden, wenn eine Getriebeübersetzung verändert wird. Beispielsweise kann dann, wenn ein Fahrer im ersten Gang fährt eine erste Pedalkennlinie eingestellt sein, die auf geringe Geschwindigkeiten ausgelegt ist und dann, wenn der Fahrer in den einen zweiten Gang wechselt, eine zweite Pedalkennlinie eingestellt werden, die auf entsprechend höhere Geschwindigkeiten ausgelegt ist. So kann bei einer Fahrt im ersten Gang eine Bedienstellung von 10 % eine Soll-Fahrgeschwindigkeit von 5 km/h deuten und im zweiten Gang eine Bedienstellung von 10 % eine Soll-Fahrgeschwindigkeit von beispielweise 20 km/h bedeuten. Der Vorteil daran ist, dass der Bereich der Soll-Fahrgeschwindigkeit jeweils an eine aktuelle Fahrgeschwindigkeit des Kraftfahrzeugs angepasst wird.

Eine Weiterbildung des Verfahrens sieht vor, dass die Steuervorrichtung die vorbestimmte Pedalkennlinie bei Erfassen eines Kick-Down der Pedalvorrichtung verändert oder nach einem Kick-Down eine andere vorbestimmte Pedalkennlinie zum Bestimmen der Soll-Fahrgeschwindigkeit verwendet. Ein Kick-Down ist aus dem Stand der Technik bekannt und ist ein Durchtreten einer jeweiligen Pedalvorrichtung über einen Widerstand hinweg, welcher auf einem Pedalweg an einem dem durchgetretenen Zustand des Pedals zugeordneten Ende des Pedalwegs auftritt. Ein Kick-Down des Gaspedals kann zum Beispiel dazu verwendet werden, in einem Kraftfahrzeug mit einem Automatikgetriebe eine Getriebeübersetzung zu verändern. Der Vorteil durch diese Weiterbildung ist, dass dann wenn ein Gang höher geschaltet wird, gleichzeitig die Pedalkennlinie an die neue Getriebeübersetzung angepasst werden kann. Ein Signal des Kick-Down kann also wiederverwendet werden wodurch das Verfahren sehr effizient ist.

In einer vorteilhaften Ausgestaltung der Erfindung ist vorgesehen, dass die Steuervorrichtung zumindest in Abhängigkeit von einer Wettersituation, welche die Steuervorrichtung in Abhängigkeit von die Wettersituation charakterisierenden Wetterdaten ermittelt, die vorbestimmte Pedalkennlinie auswählt. Das bedeutet, dass die vorbestimmte Pedalkennlinie mittels der Steuervorrichtung zumindest in Abhängigkeit von der Wettersituation ausgewählt wird. Hierbei empfängt die Steuervorrichtung die Wetterdaten, welche die Wettersituation charakterisieren. Diese Wetterdaten bieten die Möglichkeit bei beispielsweise dichtem Nebel, Starkregen oder Glatteis eine entsprechende zugehörige, vorbestimmte Pedalkennlinie auszuwählen. Hierdurch kann beispielsweise eine obere Geschwindigkeitsgrenze durch Vorbestimmung der jeweiligen Pedalkennlinie an die Wettersituation, in welcher sich das Kraftfahrzeug befindet, angepasst werden. Dies ermöglicht ein besonders sicheres Betreiben des Kraftfahrzeuges, da die jeweilige vorbestimmte Pedalkennlinie, welche die obere Geschwindigkeitsgrenze und die untere Geschwindigkeitsgrenze des Kraftfahrzeuges vorgibt, an die Wettersituation, welche beispielsweise für eine Fahrt des Kraftfahrzeuges schwierige Wetterbedingungen charakterisieren kann, angepasst werden kann.

In diesem Zusammenhang hat es sich als vorteilhaft gezeigt, wenn die Steuervorrichtung die Wetterdaten zumindest von einer externen, übergeordneten Recheneinrichtung über eine Funkverbindung empfängt. Hierbei kann die Steuervorrichtung die Wetterdaten beispielsweise von einem Online-Wetterdienst empfangen. Mit anderen Worten empfängt die Steuervorrichtung die Wetterdaten über das Internet, beispielsweise über WLAN oder über eine Mobilfunkverbindung, wodurch die Steuervorrichtung jederzeit über die aktuelle Wettersituation, in welcher sich das Kraftfahrzeug befindet oder in naher Zukunft befinden wird, informiert werden kann. Über die externe, übergeordnete Recheneinrichtung, bei welcher es sich beispielsweise um eine Servereinrichtung handeln kann, kann die Steuervorrichtung die Wetterdaten besonders sicher und zuverlässig bereitgestellt bekommen. Somit ist die Steuervorrichtung mittels der von der externen, übergeordneten Recheneinrichtung empfangenen Wetterdaten dazu im Stande, die vorbestimmte Pedalkennlinie anhand der aktuellen Wettersituation auszuwählen.

In einer alternativen oder zusätzlichen Ausgestaltung der Erfindung, ist es vorgesehen, dass die Steuervorrichtung die Wetterdaten zumindest von einer Fahrzeugkomponente des Kraftfahrzeuges empfängt. Dass bedeutet, dass die Fahrzeugkomponente die Wetterdaten für die Steuerdaten bereitstellt. Somit ist die Steuervorrichtung auch ohne Funkverbindung zu der externen, übergeordneten Rechnereinrichtung jederzeit über die aktuelle Wettersituation, in welcher sich das Kraftfahrzeug befindet, informierbar. Die vorbestimmte Pedalkennlinie wird so in vorteilhafter Weise auch bei einer Anordnung des Kraftfahrzeuges in einem Funkloch oder bei einer sonstigen unterbrochenen Funkverbindung des Kraftfahrzeuges mit der Recheneinrichtung anhand der aktuellen Wettersituation ausgewählt.

Hierbei hat es sich als vorteilhaft erwiesen, wenn die Fahrzeugkomponente eine Sensoreinrichtung oder eine Scheibenwischereinrichtung oder eine Scheinwerfereinrichtung ist. Bei der Sensoreinrichtung kann es sich beispielsweise um eine Kameraeinrichtung oder um einen Regensensor handeln. Mittels der Kameraeinrichtung und/oder des Regensensors können die die Wettersituation des Kraftfahrzeuges charakterisierenden Wetterdaten erfasst und für die Steuervorrichtung bereitgestellt werden. Mittels des Regensensors kann beispielsweise eine Niederschlagsstärke ermittelt werden und in Folge des Ermittelns der Niederschlagsstärke eine Wahrscheinlichkeit für ein Auftreten eines Aquaplanings ermittelt werden. In Abhängigkeit von der ermittelten Niederschlagsstärke und/oder der ermittelten Wahrscheinlichkeit des Aquaplaning kann die vorbestimmte Pedalkennlinie ausgewählt werden. Mittels der Kameraeinrichtung kann eine Sichtbehinderung des Fahrers des Kraftfahrzeuges durch Nebel und/oder Starkregen ermittelt werden und die vorbestimmte Pedalkennlinie in Abhängigkeit von der Sichtbehinderung ausgewählt werden. Anhand einer Wischerfrequenz der Scheibenwischereinrichtung kann des Weiteren auf die Wettersituation, insbesondere auf die Niederschlagsstärke, geschlossen werden. Mittels der Scheinwerfereinrichtung kann ermittelt werden, ob die Scheinwerfereinrichtung aktiviert ist und wenn ja, welche Leuchten der Scheinwerfereinrichtung aktiviert sind. Ist beispielsweise ein Abblendlicht der Scheinwerfereinrichtung aktiviert, so kann darauf geschlossen werden, dass sich das Kraftfahrzeug in einer dunklen Umgebung befindet, beispielsweise aufgrund einer Dämmerung. Ist beispielsweise eine Nebelschlussleuchte aktiviert, so kann darauf geschlossen werden, dass eine Sicht des Fahrers des Kraftfahrzeuges durch Nebel eingeschränkt ist. Infolgedessen kann in Abhängigkeit von der Aktivierung der Scheinwerfereinrichtung die vorbestimmte Pedalkennlinie ausgewählt werden. Mittels dieser Fahrzeugkomponenten sind die Wetterdaten besonders einfach bereitstellbar und von der Steuervorrichtung ist die Wettersituation besonders einfach aus den Wetterdaten ermittelbar.

In einer weiteren vorteilhaften Ausgestaltung der Erfindung ist vorgesehen, dass die Steuervorrichtung zumindest in Abhängigkeit von einer Verkehrssituation des Kraftfahrzeuges, welche die Steuervorrichtung in Abhängigkeit von die Verkehrssituation des Kraftfahrzeuges charakterisierenden Verkehrsdaten ermittelt, die vorbestimmte Pedalkennlinie auswählt. Mit anderen Worten empfängt die Steuervorrichtung die Verkehrsdaten und ermittelt in Abhängigkeit von den Verkehrsdaten die Verkehrssituation. Anschließend wählt die Steuervorrichtung die vorbestimmte Pedalkennlinie in Abhängigkeit von der Verkehrssituation aus. Bei Verkehrssituationen kann es sich beispielsweise um eine Autobahnfahrt des Kraftfahrzeuges oder um eine Stadtfahrt des Kraftfahrzeuges oder um eine Landstraßenfahrt des Kraftfahrzeuges handeln. Alternativ oder zusätzlich kann die Verkehrssituation charakterisieren, wie viele weitere Verkehrsteilnehmer in einem definierten Umfeld um das Kraftfahrzeug angeordnet sind und wie sich diese weiteren Verkehrsteilnehmer verhalten. Hierbei kann die Verkehrssituation beispielsweise charakterisieren, dass sich das Kraftfahrzeug in einem zähflüssigen Verkehr beziehungsweise in einem Stau befindet. Infolgedessen kann die Steuervorrichtung die vorbestimmte Pedalkennlinie in Abhängigkeit von dem zähflüssigen Verkehr beziehungsweise dem Stau auswählen. Alternativ oder zusätzlich kann die Steuervorrichtung die vorbestimmte Pedalkennlinie in Abhängigkeit davon auswählen, ob die jeweiligen Verkehrsdaten charakterisieren, dass sich das Kraftfahrzeug auf der Autobahnfahrt, auf der Landstraßenfahrt oder auf der Stadtfahrt befindet. Vorteilhafterweise ist somit die vorbestimmte Pedalkennlinie anhand der Verkehrssituation optimal auswählbar und der jeweilige durch die vorbestimmte Pedalkennlinie vorgegebene Geschwindigkeitsbereich der Verkehrssituation anpassbar.

In diesem Zusammenhang hat es sich als vorteilhaft erwiesen, wenn die Steuervorrichtung die Verkehrsdaten zumindest von der externen, übergeordneten Recheneinrichtung über eine Funkverbindung empfängt. Hierbei kann es sich bei der externen übergeordneten Recheneinrichtung um den Onlinedienst handeln. Alternativ kann es sich bei der externen, übergeordneten Recheneinrichtung um die Servereinrichtung handeln, über welche das Kraftfahrzeug beispielsweise mit einem weiteren Kraftfahrzeug über eine Car-to-Car-Kommunikation oder mit einer Verkehrsinfrastrukturkomponente, wie beispielsweise einer Ampelschalteinrichtung, über eine Car-to-Infrastructure-Kommunikation kommunizieren kann. Dies ermöglicht, dass das Kraftfahrzeug über das Internet und/oder über das weitere Kraftfahrzeug und/oder über die Verkehrsinfrastrukturkomponente die Verkehrsdaten empfängt. Beispielsweise kann die Steuervorrichtung aus den Verkehrsdaten eine Fahrzeugdichte, welche eine definierte Anzahl an Fahrzeugen in einem definierten Umkreis um das Kraftfahrzeug charakterisiert, im Bereich des Kraftfahrzeuges ermitteln und die vorbestimmte Pedalkennlinie in Abhängigkeit von der Fahrzeugdichte auswählen. Somit kann der Geschwindigkeitsbereich zum Steuern des Kraftfahrzeuges mittels der vorbestimmten Pedalkennlinie in Abhängigkeit von der Fahrzeugdichte ausgewählt werden.

Alternativ oder zusätzlich ist es vorgesehen, dass die Steuervorrichtung die Verkehrsdaten zumindest von einer Sensoreinrichtung empfängt. Hierbei kann es sich bei der Sensoreinrichtung um einen Abstandssensor, insbesondere um eine Lasereinrichtung oder um eine Ultraschalleinrichtung handeln. Mittels des Abstandssensors kann ein Abstand zwischen dem Kraftfahrzeug und einem weiteren Verkehrsteilnehmer, wie beispielsweise einem weiteren Kraftfahrzeug ermittelt werden. In Abhängigkeit von dem Abstand kann die vorbestimmte Pedalkennlinie ausgewählt werden. Hierbei kann die vorbestimmte Pedalkennlinie insbesondere derart ausgewählt werden, dass je kleiner der Abstand zwischen dem Kraftfahrzeug und dem weiteren Verkehrsteilnehmer ist, eine vorbestimmte Pedalkennlinie ausgewählt wird, deren obere Geschwindigkeitsgrenze entsprechend klein gewählt ist. Das bedeutet, dass bei einem ersten Abstand zwischen dem Kraftfahrzeug und dem weiteren Verkehrsteilnehmer eine erste vorbestimmte Pedalkennlinie mit einer ersten oberen Geschwindigkeitsgrenze gewählt wird und bei einem zu dem ersten Abstand unterschiedlichen zweiten Abstand eine zu der ersten vorbestimmten Pedalkennlinie unterschiedliche, zweite vorbestimmte Pedalkennlinie mit einer zur ersten Geschwindigkeitsgrenze unterschiedlichen, zweiten Geschwindigkeitsgrenze ausgewählt wird. Hierbei ist die erste Geschwindigkeitsgrenze niedriger als die zweite Geschwindigkeitsgrenze, sofern der erste Abstand kleiner ist als der zweite Abstand. Dadurch können Kollisionen zwischen dem Kraftfahrzeug und dem weiteren Kraftfahrzeug im Wesentlichen unterbunden werden.

In einer weiteren, vorteilhaften Ausgestaltung der Erfindung ist vorgesehen, dass die Steuervorrichtung zumindest in Abhängigkeit von einer Geschwindigkeitsvorgabe, welche die Steuervorrichtung in Abhängigkeit von die Geschwindigkeitsvorgabe charakterisierenden Geschwindigkeitsdaten ermittelt, die vorbestimmte Pedalkennlinie auswählt. Das bedeutet, dass die Steuervorrichtung die vorbestimmte Pedalkennlinie in Abhängigkeit von der Geschwindigkeitsvorgabe und/oder der Verkehrssituation und/oder der Wettersituation auswählen kann. Bei der Geschwindigkeitsvorgabe kann es sich beispielsweise um eine lokale oder überregional vorgegebene Geschwindigkeitsbegrenzung handeln. Diese Geschwindigkeitsvorgabe kann mit einem Offset versehen sein, bei welchem es sich um ein Aufmaß handelt, wobei der Offset absolut oder prozentual vorgegeben sein kann. Des Weiteren kann der Offset beispielsweise durch einen Fahrer des Kraftfahrzeuges vorgegeben werden. Die Geschwindigkeitsvorgabe kann beispielsweise eine aktuell zulässige Höchstgeschwindigkeit des Kraftfahrzeuges charakterisieren. Anhand dieser aktuell zulässigen Höchstgeschwindigkeit kann die vorbestimmte Pedalkennlinie ausgewählt werden.

In diesem Zusammenhang hat es sich als vorteilhaft erwiesen, wenn die Steuervorrichtung die Geschwindigkeitsdaten zumindest von der externen, übergeordneten Recheneinrichtung über eine Funkverbindung empfängt. Somit kann die Steuervorrichtung die Geschwindigkeitsdaten von dem Onlinedienst aus dem Internet über beispielsweise eine Mobilfunkverbindung empfangen. Hierbei können die Geschwindigkeitsdaten beispielsweise eine Geschwindigkeitsbegrenzung in Folge einer Baustelle charakterisieren, wobei die Steuervorrichtung über den Onlinedienst für definierte Streckenabschnitte vorgegebene Geschwindigkeitsbegrenzungen empfängt. Des Weiteren können über den Onlinedienst jeweilige in der Steuervorrichtung hinterlegte Geschwindigkeitsbegrenzungen für eine Fahrstrecke des Kraftfahrzeuges aktualisiert werden.

Alternativ oder zusätzlich kann die Steuervorrichtung die Geschwindigkeitsdaten zumindest von einer Fahrzeugkomponente des Kraftfahrzeuges empfangen. Hierbei ist insbesondere vorteilhaft, dass für das Empfangen der Geschwindigkeitsdaten keine Funkverbindung von der Steuervorrichtung zu der externen, übergeordneten Recheneinrichtung bestehen muss, da die Steuervorrichtung die Geschwindigkeitsdaten von der Fahrzeugkomponente empfängt. Hierbei können die Geschwindigkeitsdaten mittels der Fahrzeugkomponente ermittelt werden und für die Steuervorrichtung bereitgestellt werden.

Hierbei hat es sich als vorteilhaft erwiesen, wenn die Fahrzeugkomponente eine Sensoreinrichtung oder ein Navigationssystem des Kraftfahrzeuges ist. Bei der Sensoreinrichtung kann es sich um eine Kameraeinrichtung handeln, mittels welcher eine Umgebung des Kraftfahrzeuges aufzeichenbar ist. Hierbei können beispielsweise Verkehrszeichen mittels der Kameraeinrichtung erfasst werden und mittels einer Bildverarbeitungssoftware aus den mittels der Kameraeinrichtung erstellten Aufzeichnungen die Geschwindigkeitsdaten ermittelt werden. Hierbei handelt es sich um eine sogenannte Verkehrszeichenerkennung. Alternativ oder zusätzlich kann die Steuervorrichtung die Geschwindigkeitsdaten von dem Navigationssystem empfangen. In dem Navigationssystem können Kartendaten hinterlegt sein, aus welchen die Geschwindigkeitsdaten ermittelt werden können. Insbesondere können in dem Navigationssystem Geschwindigkeitsbegrenzungen hinterlegt sein, anhand welcher die Geschwindigkeitsdaten ermittelt werden können. Hieraus ergibt sich der Vorteil, dass auch bei einer spontanen Änderung einer Fahrtroute des Kraftfahrzeuges die Geschwindigkeitsdaten besonders einfach ermitteln können, da Geschwindigkeitsvorgaben in dem Navigationssystem hinterlegt sein können oder die Geschwindigkeitsdaten mittels der Verkehrszeichenerkennung über die Sensoreinrichtung erfasst werden können.

Eine Weiterbildung des Verfahrens sieht vor, dass der vorbestimmte Fahrmodus eine Geländefahrt und/oder eine Fahrt oder ein Rangieren des Kraftfahrzeugs mit einem an das Fahrzeug gekoppeltem Anhänger ist. Das Verfahren kann genau dann eingesetzt werden, wenn es benötigt wird, etwa durch ein Aktivieren des jeweiligen Fahrmodus. Es kann auch je nach eingestelltem Fahrmodus an eine jeweils benötigte Fahrsituation angepasst werden. Wie bereits erwähnt, ist es gerade bei einer Geländefahrt mit kontinuierlich veränderlicher Steigung oder Gefälle des Fahrzeugweges vorteilhaft, wenn ein Fahrer nicht kontinuierlich die Motorleistung anpassen muss, um eine Fahrgeschwindigkeit konstant zu halten, sondern wenn eine Steuervorrichtung dies für ihn übernimmt. Ebenso ist es auch bei einer Fahrt mit einem Anhänger eine Erleichterung für den Fahrer und vor allem eine genauere Einstellung der Fahrgeschwindigkeit möglich, wenn eine Steuervorrichtung eine Fahrgeschwindigkeit des Kraftfahrzeugs automatisch einstellt, unabhängig von einer jeweils durch den Anhänger zusätzlichen Last, die zum Erreichen einer vorbestimmten Fahrgeschwindigkeit über eine jeweilige Motorleistung ausgeglichen werden muss.

Wie bereits erwähnt, gehören zur Erfindung auch ein Kraftfahrzeug mit einer Pedalvorrichtung und eine Steuervorrichtung für ein solches Kraftfahrzeug. Die Steuervorrichtung des Kraftfahrzeugs ist dabei so ausgestaltet, dass sie das erfindungsgemäße Verfahren ausführt, um in Abhängigkeit von einer Bedienstellung der Pedalvorrichtung eine Fahrgeschwindigkeit des Kraftfahrzeugs mittels einer Regelung korrespondierend zur Bedienstellung einzustellen.

Im Folgenden ist ein Ausführungsbeispiel der Erfindung beschrieben. Hierzu zeigt:
- Fig. 1: eine schematische Darstellung eines Kraftfahrzeugs, dessen Fahrgeschwindigkeit auf einem Fahrweg verfahrensgemäß eingestellt wird;
- Fig. 2: eine schematische Darstellung einer linearen und einer nicht-linearen Pedalkennlinie; und
- Fig. 3: eine schematische Darstellung einer Pedalkennlinie eines ersten Fahrmodus und eines zweiten Fahrmodus.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

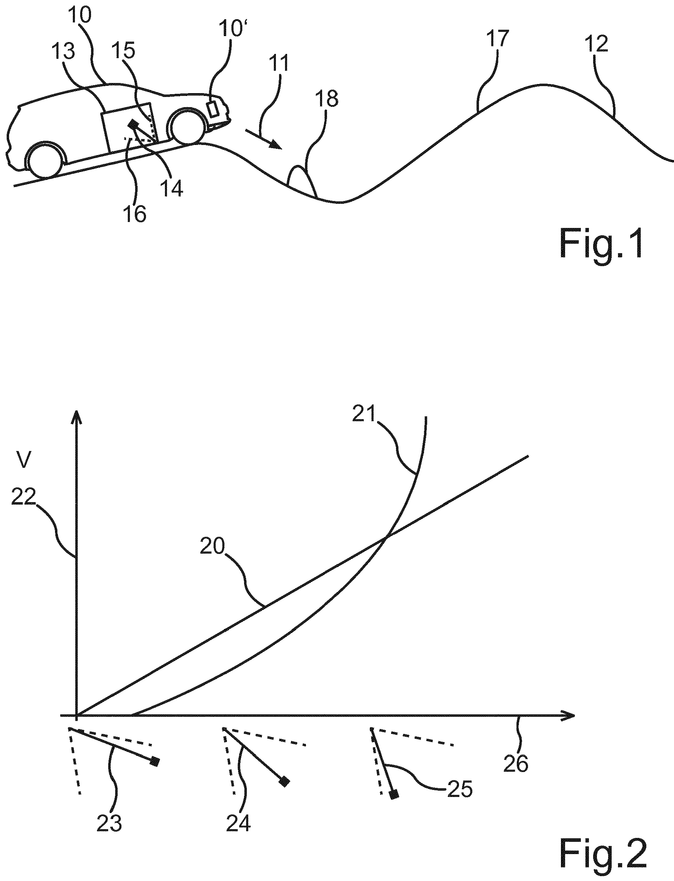

Fig. 1 zeigt hierfür eine schematische Darstellung eines Kraftfahrzeugs 10, dessen Fahrgeschwindigkeit 11 auf einem Fahrweg 12 verfahrensgemäß eingestellt wird. Das Kraftfahrzeug 10 weist eine Pedalvorrichtung 13 auf, die eine Bedienstellung 14 zwischen zwei jeweiligen Extremstellungen 15 und 16 einnehmen kann. Die Fahrgeschwindigkeit 11 wird dabei unabhängig von einer Beschaffenheit oder Straßenbeschaffenheit 17 oder einer Beschaffenheit oder Straßenbeschaffenheit 18 des Fahrweges 12 eingestellt. Wenn die Bedienstellung 14 beispielsweise eine Soll-Fahrgeschwindigkeit von 20 km/h einstellt, so wird die Fahrgeschwindigkeit 11 verfahrensgemäß auf 20 km/h angepasst oder eingeregelt, unabhängig davon, ob eine Straßenbeschaffenheit 17, 18 oder eine sonstige Straßenbeschaffenheit auf dem Fahrweg 12 vorliegt.

Fig. 2 zeigt eine schematische Darstellung einer linearen Pedalkennlinie 20 und einer nicht-linearen Pedalkennlinie 21. Eine Soll-Fahrgeschwindigkeit 22 wird in Abhängigkeit der jeweiligen Pedalkennlinie 20, 21 und einer jeweiligen Bedienstellung 26 der Pedalvorrichtung 13 vorgegeben, wobei Fig. 2 eine erste Bedienstellung 23, eine zweite Bedienstellung 24 und eine dritte Bedienstellung 25 zeigt. Die erste Bedienstellung kann beispielsweise eine Extremstellung sein, in der die Pedalvorrichtung nicht bedient ist. Hierbei kann die Fahrgeschwindigkeit auf 0 km/h eingestellt sein. Dies kann für beide Pedalkennlinie 20 und 21 gelten. Bei einer zweiten Bedienstellung 24 kann die eingestellte Geschwindigkeit Fahrgeschwindigkeit 11 bei Verwendung der Pedalkennlinie 20 höher sein als bei der Pedalkennlinie 21. Bei der Bedienstellung 25 kann die eingestellte Fahrgeschwindigkeit bei der Pedalkennlinie 20 geringer sein als bei der Pedalkennlinie 21. Insbesondere weisen Pedalkennlinien im Allgemeinen keine Unstetigkeiten auf, sodass eine Fahrgeschwindigkeit nicht ruckartig bei einer Veränderung eine jeweiligen Bedienstellung verändert wird.

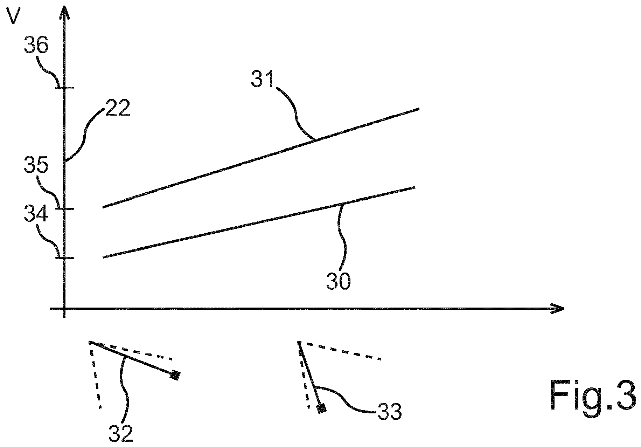

Fig. 3 zeigt eine schematische Darstellung einer Pedalkennlinie eines ersten Fahrmodus 30 und eines zweiten Fahrmodus 31. Im ersten Fahrmodus 30 korrespondiert eine erste Bedienstellung 32 mit einer ersten Soll-Fahrgeschwindigkeit 34 und eine zweite Bedienstellung 33 mit einer zweiten Soll-Fahrgeschwindigkeit 35. Im zweiten Fahrmodus 31 korrespondiert die erste Bedienstellung 32 mit der zweiten Soll-Fahrgeschwindigkeit 35 und die zweite Bedienstellung 33 mit einer dritten Soll-Fahrgeschwindigkeit 36.

In einem Ausführungsbeispiel befindet sich das Kraftfahrzeug 10 auf einer Geländefahrt. Der Fahrweg 12 ist also beispielsweise ein Waldweg oder ein Gebirgsweg. Eine Straßenbeschaffenheit 17 kann beispielsweise eine Steigung des Fahrweges sein, eine Straßenbeschaffenheit 18 kann beispielsweise eine Wurzel, ein Stein oder eine Mulde im Fahrweg sein. Wenn die Bedienstellung 14 nun beispielsweise einen Wert von 50 % beträgt, die Pedalvorrichtung also um die Hälfte durchgetreten ist, kann gemäß der Pedalkennlinie 30 eine Geschwindigkeit eingestellt werden, die zwischen der ersten Soll-Fahrgeschwindigkeit 34 und der zweiten Soll-Fahrgeschwindigkeit 35 liegt. Wenn die Pedalkennlinie 30 eine lineare Pedalkennlinie ist, so kann der somit eingestellte Wert derjenige Wert sein, der genau zwischen der Soll-Fahrgeschwindigkeit 34 und der Soll-Fahrgeschwindigkeit 35 liegt. Ist die Pedalkennlinie 30 eine nicht-lineare Pedalkennlinie, so kann beispielsweise der eingestellte Soll-Fahrgeschwindigkeit auch näher an der Soll-Fahrgeschwindigkeit 34 als an der Soll-Fahrgeschwindigkeit 35 liegen.

Wenn sich in einem anderen Ausführungsbeispiel die Beschaffenheit des Fahrweges 12 ändert, sodass keine Unebenheiten, Steigungen oder Gefälle vorhanden sind, kann ein Benutzer beispielsweise auf eine zweite Pedalkennlinie 31 umschalten. Bei dieser Pedalkennlinie 31 ist die Soll-Fahrgeschwindigkeit, welche bei der Bedienstellung 32 erreicht ist, höher als diejenige, die bei der Pedalkennlinie 30 und der Bedienstellung 32 erreicht ist. Beispielweise kann die so erreichte Soll-Fahrgeschwindigkeit bereits den zweiten Soll-Fahrgeschwindigkeit betragen. Bei einem Durchdrücken der Pedalvorrichtung bis zur Bedienstellung 33 kann mit der Pedalkennlinie 31 die Soll-Fahrgeschwindigkeit bis auf den dritten Wert der Soll-Fahrgeschwindigkeit 36 erhöht werden welcher mit der Pedalkennlinie 30 nicht erreichbar ist. Somit wird das Kraftfahrzeug 10 verfahrensgemäß mittels einer erfindungsgemäßen Steuervorrichtung 10' beschleunigt, so lange bis es die vorgegebene Soll-Fahrgeschwindigkeit, beispielsweise die Soll-Fahrgeschwindigkeit 36 erreicht.

In einem anderen Ausführungsbeispiel ist die Beschaffenheit der Straße 12 so schlecht, dass das Kraftfahrzeug nur sehr langsam, beispielsweise weniger als 6 km/h schnell fahren kann. 6 km/h kann dabei eine Kriechgeschwindigkeit des Kraftfahrzeugs 10 sein, also eine Geschwindigkeit, die das Kraftfahrzeug 10 dann erreicht, wenn vorhandene Pedalvorrichtungen des Kraftfahrzeugs 10 nicht bedient sind. Insbesondere ist dann ein Gaspedal und ein Bremspedal des Kraftfahrzeugs 10 nicht bedient. Bei einer Beschaffenheit 18, die beispielsweise ein großer Stein sein kann, kann ein Benutzer das Bremspedal zur Hälfte drücken und damit mittels einer nicht dargestellten Pedalkennlinie die Soll-Geschwindigkeit von 6 km/h auf beispielsweise 3 km/h herabsenken, sodass eine Fahrt über den Stein gefahrlos und schadenslos geschehen kann. Will der Fahrer das Kraftfahrzeug 10 zum Stillstand bringen, kann er beispielsweise das Bremspedal ganz durchdrücken und es damit in eine Extremstellung bringen, die mit einer Soll-Fahrgeschwindigkeit von 0 km/h korrespondiert. Es kann auch eine Pedalkennlinie verwendet werden, die eine Soll-Fahrgeschwindigkeit von 0 km/h, also einen Stillstand des Kraftfahrzeugs bereits bei einer zu 80 % durchgetretenen Bremspedal herbeiführt, somit wird ein Leerweg des Pedals verwendet. Ein solcher Leerweg kann auch in anderen Pedalkennlinien verwendet werden.

Das Beispiel zeigt, wie durch die Erfindung ein Fahrpedal oder Gaspedal oder ein Pedal eines Kraftfahrzeugs verwendet wird, um eine Geschwindigkeit des Kraftfahrzeugs vorzugeben. Verfahrensgemäß wird die tatsächliche Fahrgeschwindigkeit dann auf die vorgegebene Fahrgeschwindigkeit oder Soll-Fahrgeschwindigkeit eingeregelt. Das Verfahren kann vorteilhafterweise dann verwendet werden, wenn eine explizite Anforderung eines Fahrers vorliegt, etwa dadurch, dass er bei einer bestimmten Fahrsituation, etwa einer Geländefahrt, eine jeweilige Einstellung trifft, durch die das Verfahren aktiviert wird. Das Verfahren kann dabei auf maximale Fahrgeschwindigkeiten begrenzt werden, die beispielsweise 80 km/h oder 40 km/h betragen. Der Vorteil besteht dann darin, dass der Verstellweg des Pedals, welcher aus ergonomischen Gründen begrenzt ist, die einzustellende Geschwindigkeit feiner oder geeigneter auflösen kann oder den Verstellweg besser ausnutzen kann. Somit kann bei einer kleinen Fahrgeschwindigkeit der Pedalweg hoch aufgelöst sein und bei einer hohen Fahrgeschwindigkeit gering ausgelöst sein. Damit ist gemeint, dass bei einer hohen Fahrgeschwindigkeit bereits eine geringe Änderung der Bedienstellung eine hohe Änderung in der Fahrgeschwindigkeit bewirkt.

Die vorbestimmte Pedalkennlinie kann nicht nur in Abhängigkeit von der Beschaffenheit der Straße 12 sondern auch in Abhängigkeit von einer Wettersituation und/oder einer Verkehrssituation und einer Geschwindigkeitsvorgabe ausgewählt werden. Die Wettersituation kann die Steuervorrichtung in Abhängigkeit von die Wettersituation charakterisieren Wetterdaten ermitteln. Hierbei kann die Steuervorrichtung die Wetterdaten zumindest von einer externen, übergeordneten Recheneinrichtung, insbesondere eine Servereinrichtung des Internets, über eine Funkverbindung oder von einer Fahrzeugkomponente des Kraftfahrzeuges empfangen. Bei der Fahrzeugkomponente kann es sich um eine Sensoreinrichtung oder um eine Scheibenwischereinrichtung oder um eine Scheinwerfereinrichtung des Kraftfahrzeuges handeln. Alternativ oder zusätzlich zu der Wettersituation kann die Steuervorrichtung die vorbestimmte Pedalkennlinie in Abhängigkeit von der Verkehrssituation auswählen. Hierbei ermittelt die Steuervorrichtung die Verkehrssituation des Kraftfahrzeuges in Abhängigkeit von die Verkehrssituation des Kraftfahrzeuges charakterisierenden Verkehrsdaten. Diese Verkehrsdaten wiederum kann die Steuervorrichtung von der externen, übergeordneten Recheneinrichtung über die Funkverbindung oder von der Sensoreinrichtung des Kraftfahrzeuges empfangen.

Des Weiteren kann die Steuervorrichtung die vorbestimmte Pedalkennlinie in Abhängigkeit von der Geschwindigkeitsvorgabe auswählen. Diese Geschwindigkeitsvorgabe kann die Steuervorrichtung in Abhängigkeit von Geschwindigkeitsdaten, welche die Geschwindigkeitsvorgabe charakterisieren, ermitteln. Insbesondere handelt es sich bei der Geschwindigkeitsvorgabe um Geschwindigkeitsbegrenzungen und/oder um Richtgeschwindigkeiten. Diese Geschwindigkeitsdaten kann die Steuervorrichtung von der externen, übergeordneten Recheneinrichtung des Internets über die Funkverbindung oder von einer der Fahrzeugkomponenten des Kraftfahrzeuges empfangen. Das bedeutet, dass die Steuervorrichtung die Geschwindigkeitsdaten von der Sensoreinrichtung, welche insbesondere eine Kameraeinrichtung aufweist, oder von einem Navigationssystem des Kraftfahrzeuges empfangen kann. Bei dem Verfahren kann der Geschwindigkeitsbereich, den das Fahrpedal auslöst, durch das Kraftfahrzeug vorgegeben werden. Somit kann sowohl eine Obergrenze, welche eine Geschwindigkeit bei einem vollständigen Durchtreten des Fahrpedals charakterisiert, als auch eine Untergrenze, welche eine Geschwindigkeit des Fahrpedals in seiner Ausgangsstellung charakterisiert, durch das Kraftfahrzeug vorgegeben werden. Diese Einstellung des Geschwindigkeitsbereichs, der durch das Fahrpedal aufgelöst wird, und somit die Auswahl der vorbestimmten Pedalkennlinie kann auf Basis eines aktuell zulässigen Geschwindigkeitsbereichs erfolgen. Auf Basis von Kartendaten des Navigationssystems oder durch eine Verkehrszeichenerkennung der Sensoreinrichtung kann die aktuell zulässige Geschwindigkeit dem Kraftfahrzeug und insbesondere der Steuervorrichtung bekannt sein. Es bietet sich nun an, die Geschwindigkeit, welche aktuell zulässig ist, als Obergrenze für eine vollständige Betätigung des Fahrpedals zu übernehmen. Alternativ kann die Geschwindigkeit, die aktuell erlaubt ist, mit einem festen Offset, worunter ein Aufmaß zu verstehen ist, versehen sein, welcher von dem Fahrer des Kraftfahrzeuges eingestellt werden kann. Der Fahrer würde dann mittels des Fahrpedals nur einstellen, wie weit er den aktuell zulässigen Geschwindigkeitsbereich ausnutzt.

Es kann darüber hinaus sinnvoll sein, die Obergrenze an Umgebungsbedingungen anzupassen. Über Onlinedienste und/oder die Kameraeinrichtung und/oder die Regensensoren besteht die Möglichkeit, dass das Kraftfahrzeug die Wetterdaten ermittelt und in Abhängigkeit von den Wetterdaten die Wettersituation ermittelt und somit eine gute Information über aktuelle Wetterbedingungen erhält. Diese Wetterdaten bieten die Möglichkeit, die obere Geschwindigkeitsgrenze durch ein Auswählen der entsprechend vorbestimmten Pedalkennlinie anzupassen. So kann bei dichtem Nebel, Starkregen oder Glatteis die jeweilige Geschwindigkeit des Kraftfahrzeuges entsprechend eingestellt werden. Sind keine Onlinedaten der Onlinedienste verfügbar, so können die fahrzeugeigene Sensoreinrichtung, insbesondere ein Regen-Licht-Sensor, oder weitere Fahrzeugkomponenten, wie Scheibenwischereinrichtung und insbesondere deren Scheibenwischerstellung sowie eine Nebelschlussleuchte, berücksichtigt werden. Über eine Übersteuerung der Regelung des Fahrpedals, insbesondere über einen Kick-Down, besteht für den Fahrer dennoch eine Möglichkeit, die Geschwindigkeit des Kraftfahrzeuges unabhängig vom Wetter oder einer Gesetzeslage insbesondere hinsichtlich des aktuell zulässigen Geschwindigkeitsbereichs selbständig zu wählen.

Eine Anpassung der Untergrenze einer mittels der vorgegebenen Pedalkennlinie vorgegebenen Geschwindigkeitsvorgabe bietet sich als Ausführungsform ebenfalls an. Über seine Abstandssensorikeinrichtung kann das Kraftfahrzeug über sehr gute Kenntnis umgebender Fahrzeuge verfügen. Gerade auf Autobahnen kann es für den Fahrer wichtig sein, wie sich sein Kraftfahrzeug in Bezug auf andere Verkehrsteilnehmer verhält. Hierbei kann eine jeweilige Absolutgeschwindigkeit des Kraftfahrzeuges für den Fahrer weniger wichtig sein. Eine Minimalgeschwindigkeit und somit die Untergrenze der Geschwindigkeitsvorgabe sollte insbesondere auf Autobahnen nicht 0 km/h betragen, sondern könnte sich an einem langsamsten Verkehrsteilnehmer in einem definierten Umfeld um das Kraftfahrzeug orientieren. Hierbei könnte die Minimalgeschwindigkeit insbesondere auf deutschen Autobahnen fahrspurindividuell ausgelegt sein. Dies beträfe einen Lastkraftwagen mit 80 km/h oder bei langer Fahrt in einer PKW-Kolone 130 km/h.

Alternativ oder zusätzlich kann ein Geschwindigkeitsband der Regelung, insbesondere der Geschwindigkeitsbereich, welchen das Fahrpedal auflöst, in Abhängigkeit von Car-to-X-Daten beziehungsweise Schwarmdaten angepasst werden. Unter Car-to-X-Daten sind Daten zu verstehen, welche von dem Kraftfahrzeug über eine jeweilige Funkverbindung mit seiner Umgebung, beispielsweise weiteren Kraftfahrzeugen oder einer Verkehrsinfrastrukturkomponente oder sonstigen in einem definierten Umkreis zu dem Kraftfahrzeug angeordneten Einrichtungen kommuniziert werden.

Über eine Betätigung des Bremspedals bietet sich dem Fahrer eine einfache Möglichkeit eine jeweilige Geschwindigkeit des Kraftfahrzeuges nach seinen Wünschen nach unten zu korrigieren.

Durch Auswählen der vorbestimmten Pedalkennlinie in Abhängigkeit von der Geschwindigkeitsvorgabe und/oder der Wettersituation und/oder der Verkehrssituation des Kraftfahrzeuges ist eine Anpassung der Geschwindigkeitsregelung des Kraftfahrzeuges an gültige Geschwindigkeitsvorgaben und Wetterbedingungen möglich.

Das Verfahren kann die Fahrgeschwindigkeit durch eine Fahrzeugbremse anpassen oder auch allein über das Motormoment anpassen oder einregeln. Die Regelverfahren sind dabei so gewählt, dass sowohl eine Beschleunigung als auch ein Bremsvorgang begrenzt sind, das Kraftfahrzeug also keine ruckhaften Bewegungen machen kann. Die Soll-Fahrgeschwindigkeit kann beispielweise in einem Display des Kraftfahrzeugs angezeigt werden. Im Falle, dass das Verfahren bei einem elektrifizierten Kraftfahrzeug verwendet wird, kann ein vorhandener Elektromotor eine Drehzahlregelung übernehmen, wodurch auch ein durchdrehendes Rad verhindert wird. Die Geschwindigkeit am Rad bleibt nämlich konstant, und das Rad dreht deshalb nicht durch, es wird höchstens ein Schlupf größer. Das Verfahren kann auch bei Nutzfahrzeugen zum Rangieren verwendet werden. Somit kann zum Beispiel über das Fahrpedal eine konstante Geschwindigkeit, die etwa nahe der Kriechgeschwindigkeit sein kann, eingestellt werden. Die Pedalkennlinie kann auch variabel gestaltet werden, sodass bei langsamen Veränderungen der Bedienstellung nur kleine Änderungen an der Soll-Fahrgeschwindigkeit vorgenommen werden und bei schnellen Änderungen der Bedienstellung große Änderungen der Soll-Fahrgeschwindigkeit vorgenommen werden. Mittels eines Kick-Down kann die Pedalkennlinie verändert oder umgeschaltet werden oder Geschwindigkeitsbereiche der Pedalkennlinie verändert werden. Zum Beispiel kann bei einem Kick-Down eine Soll-Fahrgeschwindigkeit bei einer ersten Extremstellung 100% von 10 km/h auf 40 km/h umgestellt werden und bei einer Bedienstellung von 0 % die korrespondierende Soll-Fahrgeschwindigkeit wieder auf 10 km/h zurückgeschaltet werden. Als Eingangssignal kann auch ein Signal des Bremspedals des Kraftfahrzeugs verwendet werden. Die Ausführung des Verfahrens kann in einem Kraftfahrzeug von einem Fahrer beispielsweise dadurch ausgewählt werden, dass dieser eine solche Zusatzfunktion auswählt, beispielweise in dem er einen Hebel, eine Taste, einen Schalter und/oder eine virtuelle Taste auf einem Display bedient. Eine Pedalkennlinie für ein Bremspedal kann so ausgeführt sein, dass ein bestimmter Leerweg vorhanden ist, in dem keine Bremsung stattfindet, beispielsweise ein Wert der Bedienstellung von 0 % bis 30 %. Es kann auch vorgesehen sein, dass in dem Verfahren die Kriechgeschwindigkeit des Kraftfahrzeugs benutzerseitig eingestellt werden kann. So kann die Kriechgeschwindigkeit beispielsweise noch weiter verringert werden und die Auflösung der Pedalvorrichtung noch weiter erhöht werden zwischen den beiden Extremstellungen. Ein Verringern der Fahrgeschwindigkeit, um diese an eine geringere Soll-Fahrgeschwindigkeit anzupassen, kann bei einem elektrifiziert Kraftfahrzeug auch über Rekuperation, das bedeutet Energierückgewinnung, durchgeführt werden. Ein wesentlicher Vorteil und Bestandteil der Erfindung ist es, dass auch ein Bremspedal oder eine Bedienstellung des Bremspedals als unmittelbares Eingangssignal für eine Fahrfunktion genutzt werden kann. Verfahrensgemäß wird dabei auch bei Geschwindigkeiten unterhalb der Kriechgeschwindigkeit ein hohes Antriebsmoment des Motors bis hin zu einem vollen Motormoment genutzt, um beispielsweise über sehr hohe Steigungen mit einer genau definierten Fahrgeschwindigkeit fahren zu können. Eine Bremse kann dabei von einem elektronischen Bremskraftverstärker unterstützt oder gesteuert ein. Dadurch kann ein lineares Übertragungsverhalten der Bedienstellung des Bremspedals oder eine dazu korrespondierende Pedalkennlinie ermöglicht werden. Somit werden sowohl Bremsdruck oder Bremswirkung als auch ein Motormoment oder Antriebsmoment des Kraftfahrzeugs geregelt. Über eine weitere Funktion "Auto-hold" kann zusätzlich das Kraftfahrzeug autonom gehalten werden, im Falle einer Beschleunigung kann die Funktion wieder deaktiviert werden oder gelöst werden. Für die Begrenzung der Fahrzeugbeschleunigung sind vorteilhafterweise Filter oder Gradientenbegrenzungen vorgesehen, damit bei einer sprunghaften Änderung des Pedal oder der Pedalvorrichtung ein komfortables und sicheres Anfahren ermöglicht ist. Ein schnelles Abbremsen ist dabei jedoch dennoch gewährleistet. Wenn das Verfahren vom Kraftfahrzeug oder einer Steuervorrichtung des Kraftfahrzeugs durchgeführt wird, kann dies einem Fahrer des Kraftfahrzeugs in geeigneter Weise, beispielweise auf einem Display oder eine Anzeige des Kraftfahrzeugs, dargestellt werden. Das Verfahren kann ideal auch für elektrifizierte Kraftfahrzeuge verwendet werden, da diese über Rekuperation verfügen. Der Vorteil am Verfahren ist, dass zur Regelung oder Steuerung einer Fahrfunktion, also der Fahrgeschwindigkeit ein einziges Pedal verwendet werden kann. Es kann also entweder das Bremspedal oder das Fahrpedal einzeln verwendet werden, um die Geschwindigkeit auf eine vom Fahrer gewünschte oder vorgegebene Geschwindigkeit anzupassen oder einzuregeln. Mit dem Bremspedal können vor allem niedrige Geschwindigkeiten sehr genau eingestellt oder kontrolliert werden.

Insgesamt zeigt das Beispiel, wie eine Pedalvorrichtung mit einem einzigen Pedal, etwa dem Gaspedal oder dem Bremspedal eines Kraftfahrzeugs, verwendet wird, um eine vorgegebene Soll-Fahrgeschwindigkeit unabhängig von einer Straßenbeschaffenheit wie einer Steigung oder einer Straßenunebenheit einzustellen oder zu einzuregeln. Durch die Bedienstellung der Pedalvorrichtung wird also eine Soll-Fahrgeschwindigkeit vorgegeben und nicht ein Motormoment eingestellt. Das Motormoment wird verfahrensgemäß von einer Steuervorrichtung angepasst, um die vorgegebene Fahrgeschwindigkeit zu erreichen. Die Fahrgeschwindigkeit des Kraftfahrzeugs wird verfahrensgemäß solange angepasst, wie die jeweilige Bedienstellung der Pedalvorrichtung andauert.

### Bezugszeichenliste

- (10): Kraftfahrzeug
- (11): Fahrgeschwindigkeit
- (12): Fahrweg
- (13): Pedalvorrichtung
- (14): Bedienstellung
- (15): Extremstellungen
- (16): Extremstellungen
- (17): Beschaffenheit
- (18): Beschaffenheit
- (20): Pedalkennlinie
- (21): Pedalkennlinie
- (22): Soll-Fahrgeschwindigkeit
- (23): Bedienstellung
- (24): Bedienstellung
- (25): Bedienstellung
- (26): Bedienstellung
- (30): Fahrmodus
- (31): Fahrmodus
- (32): Bedienstellung
- (33): Bedienstellung
- (34): erste Soll-Fahrgeschwindigkeit
- (35): zweite Soll-Fahrgeschwindigkeit
- (36): dritte Soll-Fahrgeschwindigkeit

## Patentansprüche

1. Verfahren zum Einstellen einer Fahrgeschwindigkeit (11) eines Kraftfahrzeugs (10) auf einem Fahrweg (12), wobei eine Steuervorrichtung (10`) des Kraftfahrzeugs (10) die Fahrgeschwindigkeit (11) in Abhängigkeit von einer durch zwei Extremstellungen (15, 16) begrenzten Bedienstellung (14) einer durch einen Fahrer bedienbaren Pedalvorrichtung (13) des Kraftfahrzeugs (10) einstellt, wobei die Steuervorrichtung (10') die Bedienstellung (14) der Pedalvorrichtung (13) erfasst und in Abhängigkeit von der erfassten Bedienstellung (14) zumindest in einem vorbestimmten Fahrmodus (30) eine zur jeweiligen Bedienstellung (14) korrespondierende Soll-Fahrgeschwindigkeit (22) ermittelt und die Steuervorrichtung (10') die Fahrgeschwindigkeit (11) korrespondierend zu der jeweiligen Soll-Fahrgeschwindigkeit (22) unabhängig von einer aktuellen Beschaffenheit (17, 18) des Fahrweges (12) mittels einer Regelung einstellt, solange die jeweilige Bedienstellung (14) erfasst wird, und die Soll-Fahrgeschwindigkeit (22) durch die Bedienstellung (14) der Pedalvorrichtung (13) in Kombination mit einer vorbestimmten Pedalkennlinie (20, 21) der Pedalvorrichtung (13) ermittelt wird,
**dadurch gekennzeichnet, dass** die vorbestimmte Pedalkennlinie (20, 21) an eine jeweilige Fahrsituation anpassbar ist.

2. Verfahren nach Anspruch 1, wobei bei einer Änderung der Bedienstellung (14) in Richtung einer der ersten Extremstellungen (15) die Soll-Fahrgeschwindigkeit (22) erhöht wird und bei einer Änderung der Bedienstellung (14) in Richtung einer zweiten der Extremstellungen (16) die Soll-Fahrgeschwindigkeit (22) verringert wird.

3. Verfahren nach einem der vorhergehenden Ansprüche, wobei als Pedalvorrichtung (13) ein einziges Fahrzeugpedal des Kraftfahrzeugs (10) verwendet wird, wobei die Extremstellungen (15, 16) jeweils zu einer durch den Fahrmodus (30) vorbestimmten Soll-Fahrgeschwindigkeit (22) korrespondieren.

4. Verfahren nach einem der vorhergehenden Ansprüche, wobei als Pedalvorrichtung (13) ein Beschleunigungspedal verwendet wird und eine Änderung der Bedienstellung (14) des Beschleunigungspedals von einer unbedienten Extremstellung (15) in eine durchgedrückte Extremstellung (16) mit einer Erhöhung der Soll-Fahrgeschwindigkeit (22) korrespondiert, und/oder als Pedalvorrichtung (13) ein Bremspedal verwendet wird und eine Änderung dessen Bedienstellung (14) von einer unbedienten Extremstellung (15) in eine durchgedrückte Extremstellung (16) mit einer Verringerung der Soll-Fahrgeschwindigkeit (22) korrespondiert.

5. Verfahren nach einem der vorhergehenden Ansprüche, wobei als die Pedalkennlinie (20, 21) eine nicht-lineare Pedalkennlinie (20, 21) genutzt wird und/oder die Pedalkennlinie (20, 21) von einem Benutzer ausgewählt und/oder definiert wird.

6. Verfahren nach einem der vorhergehenden Ansprüche, wobei die Pedalkennlinie (20, 21) zumindest bezüglich einer Auswirkung einer Änderung der Bedienstellung (14) auf eine Änderung der Soll-Fahrgeschwindigkeit (22) in Abhängigkeit der Fahrgeschwindigkeit (11) und/oder einer aktuellen Getriebeübersetzung eingestellt wird.

7. Verfahren nach einem der vorhergehenden Ansprüche, wobei die Steuervorrichtung (10`) die vorbestimmte Pedalkennlinie (20, 21) bei Erfassen eines Kick-Down der Pedalvorrichtung (13) verändert oder nach dem Kick-Down eine andere vorbestimmte Pedalkennlinie (20, 21) zum Bestimmen der Soll-Fahrgeschwindigkeit (22) verwendet.

8. Verfahren nach einem der vorhergehenden Ansprüche, wobei die Steuervorrichtung zumindest in Abhängigkeit von einer Wettersituation, welche die Steuervorrichtung in Abhängigkeit von die Wettersituation charakterisierenden Wetterdaten ermittelt, die vorbestimmte Pedalkennlinie auswählt.

9. Verfahren nach Anspruch 8, wobei die Steuervorrichtung die Wetterdaten zumindest von einer externen, übergeordneten Recheneinrichtung über eine Funkverbindung empfängt.

10. Verfahren nach Anspruch 8 oder 9, wobei die Steuervorrichtung die Wetterdaten zumindest von einer Fahrzeugkomponente des Kraftfahrzeugs empfängt.

11. Verfahren nach Anspruch 10, wobei die Fahrzeugkomponente eine Sensoreinrichtung oder eine Scheibenwischereinrichtung oder eine Scheinwerfereinrichtung ist.

12. Verfahren nach einem der vorhergehenden Ansprüche, wobei die Steuervorrichtung zumindest in Abhängigkeit von einer Verkehrssituation des Kraftfahrzeugs, welche die Steuervorrichtung in Abhängigkeit von die Verkehrssituation des Kraftfahrzeugs charakterisierenden Verkehrsdaten ermittelt, die vorbestimmte Pedalkennlinie auswählt.

13. Verfahren nach Anspruch 12, wobei die Steuervorrichtung die Verkehrsdaten zumindest von der externen, übergeordneten Recheneinrichtung über eine Funkverbindung empfängt.

14. Verfahren nach Anspruch 12 oder 13, wobei die Steuervorrichtung die Verkehrsdaten zumindest von einer Sensoreinrichtung empfängt.

15. Verfahren nach einem der vorhergehenden Ansprüche, wobei die Steuervorrichtung zumindest in Abhängigkeit von einer Geschwindigkeitsvorgabe, welche die Steuervorrichtung in Abhängigkeit von die Geschwindigkeitsvorgabe charakterisierenden Geschwindigkeitsdaten ermittelt, die vorbestimmte Pedalkennlinie auswählt.

16. Verfahren nach Anspruch 15, wobei die Steuervorrichtung die Geschwindigkeitsdaten zumindest von der externen, übergeordneten Recheneinrichtung über eine Funkverbindung empfängt.

17. Verfahren nach Anspruch 15 oder 16, wobei die Steuervorrichtung die Geschwindigkeitsdaten zumindest von einer Fahrzeugkomponente des Kraftfahrzeugs empfängt.

18. Verfahren nach Anspruch 17, wobei die Fahrzeugkomponente eine Sensoreinrichtung oder ein Navigationssystem ist.

19. Verfahren nach einem der vorhergehenden Ansprüche, wobei der vorbestimmte Fahrmodus (30, 31) eine Geländefahrt und/oder eine Fahrt oder ein Rangieren des Kraftfahrzeugs (10) mit einem an das Fahrzeug (10) gekoppeltem Anhänger ist.

20. Kraftfahrzeug (10) mit einer Pedalvorrichtung (13) und einer Steuervorrichtung zum mit einer Bedienstellung (14) der Pedalvorrichtung (13) korrespondierenden Einstellen einer Fahrgeschwindigkeit (11) Kraftfahrzeugs (10), **dadurch gekennzeichnet, dass** die Steuervorrichtung (10') dazu ausgestaltet ist, ein Verfahren nach einem der vorhergehenden Ansprüche auszuführen.

## Claims

1. Method for adjusting a driving speed (11) of a motor vehicle (10) on a route (12), a control apparatus (10') of the motor vehicle (10) adjusting the driving speed (11) depending on an operating position (14) of a pedal apparatus (13) of the motor vehicle (10) that can be operated by a driver, which operating position is delimited by two extreme positions (15, 16), the control apparatus (10') detecting the operating position (14) of the pedal apparatus (13) and, depending on the detected operating position (14), determining, at least in a predetermined driving mode (30), a target driving speed (22) corresponding to the relevant operating position (14), and the control apparatus (10') adjusting, by means of a closed-loop control system, the driving speed (11) corresponding to the relevant target driving speed (22) irrespective of a current property (17, 18) of the route (12), as long as the relevant operating position (14) is detected, and the target driving speed (22) being determined by the operating position (14) of the pedal apparatus (13) in combination with a predetermined characteristic pedal curve (20, 21) of the pedal apparatus (13),
**characterized in that** the predetermined characteristic pedal curve (20, 21) can be adapted to a relevant driving situation.

2. Method according to claim 1, wherein when the operating position (14) is changed in the direction of one of the first extreme positions (15), the target driving speed (22) is increased, and when the operating position (14) is changed in the direction of a second of the extreme positions (16), the target driving speed (22) is reduced.

3. Method according to either of the preceding claims, wherein a single vehicle pedal of the motor vehicle (10) is used as the pedal apparatus (13), wherein the extreme positions (15, 16) each correspond to a target driving speed (22) predetermined by the driving mode (30).

4. Method according to any of the preceding claims, wherein an acceleration pedal is used as the pedal apparatus (13) and a change in the operating position (14) of the accelerator pedal from an unoperated extreme position (15) to a depressed extreme position (16) corresponds to an increase in the desired driving speed (22), and/or a brake pedal is used as the pedal apparatus (13) and a change in the operating position (14) thereof from an unoperated extreme position (15) to a depressed extreme position (16) corresponds to a reduction in the desired driving speed (22).

5. Method according to any of the preceding claims, wherein a non-linear characteristic pedal curve (20, 21) is used as the characteristic pedal curve (20, 21) and/or the characteristic pedal curve (20, 21) is selected and/or defined by a user.

6. Method according to any of the preceding claims, wherein the characteristic pedal curve (20, 21) is set at least with respect to an effect of a change in the operating position (14) on a change in the desired driving speed (22) depending on the driving speed (11) and/or a current transmission ratio.

7. Method according to any of the preceding claims, wherein the control apparatus (10') changes the predetermined characteristic pedal curve (20, 21) when a kick down of the pedal apparatus (13) is detected or a different predetermined characteristic pedal curve (20, 21) is used for determining the target driving speed (22) after the kick down.

8. Method according to any of the preceding claims, wherein the control apparatus selects the predetermined characteristic pedal curve at least depending on a weather situation which is determined by the control apparatus depending on weather data characterizing the weather situation.

9. Method according to claim 8, wherein the control apparatus receives the weather data at least from an external, superordinate computing device via a radio connection.

10. Method according to either claim 8 or claim 9, wherein the control apparatus receives the weather data at least from a vehicle component of the motor vehicle.

11. Method according to claim 10, wherein the vehicle component is a sensor device or a windscreen wiper device or a headlight device.

12. Method according to any of the preceding claims, wherein the control apparatus selects the predetermined characteristic pedal curve at least depending on a traffic situation of the motor vehicle which is determined by the control apparatus depending on traffic data characterizing the traffic situation of the motor vehicle.

13. Method according to claim 12, wherein the control apparatus receives the traffic data at least from the external, superordinate computing device via a radio connection.

14. Method according to either claim 12 or claim 13, wherein the control apparatus receives the traffic data at least from a sensor device.

15. Method according to any of the preceding claims, wherein the control apparatus selects the predetermined characteristic pedal curve at least depending on a speed specification which is determined by the control apparatus depending on speed data characterizing the speed specification.

16. Method according to claim 15, wherein the control apparatus receives the speed data at least from the external, superordinate computing device via a radio link.

17. Method according to either claim 15 or claim 16, wherein the control apparatus receives the speed data at least from a vehicle component of the motor vehicle.

18. Method according to claim 17, wherein the vehicle component is a sensor device or a navigation system.

19. Method according to any of the preceding claims, wherein the predetermined driving mode (30, 31) is off-road driving and/or driving or maneuvering of the motor vehicle (10) with a trailer coupled to the vehicle (10).

20. Motor vehicle (10) comprising a pedal apparatus (13) and a control apparatus for adjusting a driving speed (11) of the motor vehicle (10), the adjustment corresponding to an operating position (14) of the pedal apparatus (13), **characterized in that** the control apparatus (10') is designed to carry out a method according to any of the preceding claims.

## Revendications

1. Procédé de réglage de la vitesse de déplacement (11) d'un véhicule automobile (10) sur un trajet de déplacement (12), dans lequel un dispositif de commande (10') du véhicule automobile (10) règle la vitesse de déplacement (11) en fonction d'une position de fonctionnement (14) limitée par deux positions extrêmes (15, 16) d'un dispositif à pédale (13) du véhicule automobile (10) pouvant être actionné par un conducteur, dans lequel le dispositif de commande (10') détecte la position de fonctionnement (14) du dispositif à pédale (13) et, en fonction de la position de fonctionnement (14) détectée, détermine au moins dans un mode de déplacement prédéterminé (30) une vitesse de déplacement théorique (22) correspondant à la position de fonctionnement (14) respective et le dispositif de commande (10') règle la vitesse de déplacement (11) correspondant à la vitesse de déplacement théorique (22) respective indépendamment de l'état actuel (17, 18) du trajet de déplacement (12) au moyen d'une régulation, tant que la position de fonctionnement (14) respective est détectée et le vitesse de déplacement théorique (22) est déterminée par la position de fonctionnement (14) du dispositif à pédale (13) en combinaison avec une courbe caractéristique à pédale (20, 21) prédéterminée du dispositif à pédale (13),
**caractérisé en ce que** la courbe caractéristique à pédale (20, 21) prédéterminée peut être adaptée à une situation de déplacement respective.

2. Procédé selon la revendication 1, dans lequel lors d'une modification de la position de fonctionnement (14) en direction d'une des premières positions extrêmes (15), la vitesse de déplacement théorique (22) est augmentée et lors d'une modification de la position de fonctionnement (14) en direction d'une deuxième des positions extrêmes (16), la vitesse de déplacement théorique (22) est réduite.

3. Procédé selon l'une quelconque des revendications précédentes, dans lequel une pédale de véhicule unique du véhicule automobile (10) est utilisée comme dispositif à pédale (13), dans lequel les positions extrêmes (15, 16) correspondent respectivement à une vitesse de déplacement théorique (22) prédéterminée par le mode de déplacement (30).

4. Procédé selon l'une quelconque des revendications précédentes, dans lequel une pédale d'accélération est utilisée comme dispositif à pédale (13) et une modification de la position de fonctionnement (14) de la pédale d'accélération d'une position extrême (15) non actionnée dans une position extrême (16) enfoncée correspond à une augmentation de la vitesse de déplacement théorique (22) et/ou une pédale de frein est utilisée comme dispositif à pédale (13) et une modification de sa position de fonctionnement (14) d'une position extrême (15) non actionnée dans une position extrême (16) enfoncée correspond à une réduction de la vitesse de déplacement théorique (22).

5. Procédé selon l'une quelconque des revendications précédentes, dans lequel une courbe caractéristique à pédale (20, 21) non linéaire est utilisée comme courbe caractéristique à pédale (20, 21) et/ou la courbe caractéristique à pédale (20, 21) est sélectionnée et/ou définie par un utilisateur.

6. Procédé selon l'une quelconque des revendications précédentes, dans lequel la courbe caractéristique à pédale (20, 21) est réglée au moins par rapport à un effet d'une modification de la position de fonctionnement (14) sur une modification de la vitesse de déplacement théorique (22) en fonction de la vitesse de déplacement (11) et/ou d'un rapport de transmission actuel.

7. Procédé selon l'une quelconque des revendications précédentes, dans lequel le dispositif de commande (10') modifie la courbe caractéristique à pédale (20, 21) prédéterminée lors de la détection d'un enfoncement par le pied du dispositif à pédale (13) ou, après l'enfoncement par le pied, une autre courbe caractéristique à pédale (20, 21) prédéterminée est utilisée pour déterminer la vitesse de déplacement théorique (22).

8. Procédé selon l'une quelconque des revendications précédentes, dans lequel le dispositif de commande sélectionne, au moins en fonction d'une situation météorologique, que le dispositif de commande détermine en fonction de données météorologiques caractérisant la situation météorologique, la courbe caractéristique à pédale prédéterminée.

9. Procédé selon la revendication 8, dans lequel le dispositif de commande reçoit les données météorologiques au moins d'un dispositif de calcul supérieur externe par le biais d'une liaison radio.

10. Procédé selon la revendication 8 ou 9, dans lequel le dispositif de commande reçoit les données météorologiques au moins d'un composant de véhicule du véhicule automobile.

11. Procédé selon la revendication 10, dans lequel le composant de véhicule est un dispositif de capteur ou un dispositif d'essuie-glace ou un dispositif de phare.

12. Procédé selon l'une quelconque des revendications précédentes, dans lequel le dispositif de commande sélectionne, au moins en fonction d'une situation de circulation du véhicule automobile, que le dispositif de commande détermine en fonction de données de circulation caractérisant la situation de circulation du véhicule automobile, la courbe caractéristique à pédale prédéterminée.

13. Procédé selon la revendication 12, dans lequel le dispositif de commande reçoit les données de circulation au moins d'un dispositif de calcul supérieur externe par le biais d'une liaison radio.

14. Procédé selon la revendication 12 ou 13, dans lequel le dispositif de commande reçoit les données de circulation au moins d'un dispositif de capteur.

15. Procédé selon l'une quelconque des revendications précédentes, dans lequel le dispositif de commande sélectionne, au moins en fonction d'une valeur de consigne de vitesse, que le dispositif de commande détermine en fonction de données de vitesse caractérisant la valeur de consigne de vitesse, la courbe caractéristique à pédale prédéterminée.

16. Procédé selon la revendication 15, dans lequel le dispositif de commande reçoit les données de vitesse au moins d'un dispositif de calcul supérieur externe par le biais d'une liaison radio.

17. Procédé selon la revendication 15 ou 16, dans lequel le dispositif de commande reçoit les données de vitesse au moins d'un composant de véhicule du véhicule automobile.

18. Procédé selon la revendication 17, dans lequel le composant de véhicule est un dispositif de capteur ou un système de navigation.

19. Procédé selon l'une quelconque des revendications précédentes, dans lequel le mode de déplacement (30, 31) prédéterminé est un déplacement tout-terrain et/ou un déplacement ou une manoeuvre du véhicule automobile (10) avec une remorque accouplée au véhicule (10).

20. Véhicule automobile (10) comprenant un dispositif à pédale (13) et un dispositif de commande pour le réglage correspondant à une position de fonctionnement (14) du dispositif à pédale (13) de la vitesse de déplacement (11) du véhicule automobile (10), **caractérisé en ce que** le dispositif de commande (10') est conçu pour exécuter un procédé selon l'une quelconque des revendications précédentes.
